# EUROPEAN PATENT APPLICATION

(11) **EP 4 811 503 A1**
(43) Date of publication of application: **23.09.2026**
(21) Application number: 24926663.6
(22) Date of filing: 21.08.2024
(51) Int. Cl.: H01M 50/103, H01M 50/169, H01M 50/131, H01M 10/04, H01M 10/052, H01M 10/0525, H01M 10/054

(54) **BATTERY AND ELECTRICAL APPARATUS**

(30) Priority: 27.02.2024 CN 202420363641 U
(71) Applicant: Contemporary Amperex Technology Co., Limited, Ningde, Fujian 352100 (CN)
(72) Inventor: CAO, Mengkai, Ningde, Fujian 352100 (CN); JIANG, Xiangwei, Ningde, Fujian 352100 (CN); CHEN, Xinxiang, Ningde, Fujian 352100 (CN); HUANG, Shoujun, Ningde, Fujian 352100 (CN); ZHENG, Yulian, Ningde, Fujian 352100 (CN); WANG, Peng, Ningde, Fujian 352100 (CN)
(74) Representative: Kraus & Lederer PartGmbB
(86) International application number: PCT/CN2024/113619
(87) International publication number: WO 2025/179796

(57) **Abstract**

A battery (100) and an electrical apparatus. The battery (100) comprises a bare cell (1), a housing (2) and a top cover (3), wherein the housing (2) is formed with an accommodating cavity (2a), the accommodating cavity (2a) penetrates through one side surface of the housing (2) along a first direction to form a mounting port (2b), the bare cell (1) is arranged in the accommodating cavity (2a), a housing wall of the housing (2) is formed with a heated softening area (2c) and a body area (2d), the hardness of the heated softening area (2c) is lower than the hardness of the body area (2d), the bare cell (1) and the heated softening area (2c) are arranged at an interval along the first direction, and the top cover (3) covers the mounting port (2b).

## Description

### CROSS-REFERENCE TO RELATED APPLICATIONS

The present disclosure is based on and claims priority to Chinese Patent Application No. 202420363641.2, filed on February 27, 2024, entitled "BATTERY AND ELECTRICAL APPARATUS", the entire content of which is incorporated herein by reference.

### TECHNICAL FIELD

The present disclosure relates to the field of battery technologies, and in particular, to a battery and an electrical apparatus.

### BACKGROUND

New energy batteries are increasingly widely used in both daily life and industry. New energy batteries are not only applied in energy storage power supply systems such as water power, fire power, wind power, and solar power stations, but also widely applied in electric transportation tools, such as electric bicycles, electric motorcycles and electric vehicles.

In the related art, bare battery cells are disposed inside the case of a battery. During the charging and discharging process of the battery, the bare battery cells undergo expansion, which can easily cause deformation and cracking of the case.

### SUMMARY OF THE INVENTION

In view of the above, the embodiments of the present disclosure aim to provide a battery and an electrical apparatus, which can reduce the probability of cracking of the case.

To achieve the aforementioned objective, technical solutions in the embodiments of the present disclosure are implemented as follows:
An aspect of the embodiments of the present disclosure discloses a battery, including a bare battery cell, a case, and a top cover. The case has an accommodating cavity formed therein, where the accommodating cavity penetrates through one side surface of the case along a first direction to form an installation opening, the bare battery cell is disposed in the accommodating cavity, and a heat-softening region and a body region are formed in a case wall of the case, where a hardness of the heat-softening region is lower than a hardness of the body region, and the bare battery cell and the heat-softening region are spaced apart along the first direction. The top cover covers the installation opening.

In the aforementioned technical solution, by providing the accommodating cavity inside the case and the installation opening in communication with the accommodating cavity, the bare battery cell can be placed into the accommodating cavity through the installation opening, thereby protecting the bare battery cell to some extent and improving the service life of the bare battery cell. Here, during the charging and discharging process of the battery, the bare battery cell undergoes cyclic expansion, causing stress concentration at the installation opening where the top cover is connected to the case, which easily leads to cracking. Therefore, in the present disclosure, by forming the heat-softening region and the body region on the case wall of the case, and making the hardness of the heat-softening region lower than that of the body region, after expansion of the bare battery cell, the heat-softening region with lower hardness can absorb and disperse the force exerted by the bare battery cell on the case wall of the case, thereby reducing the risk of cracking of the case, subsequently reducing the probability of electrolyte leakage inside the case, and achieving high safety. By spacing the bare battery cell and the heat-softening region apart along the first direction, damage to the bare battery cell caused by the temperature of the heat-softening region can be reduced, thereby improving the service life of the bare battery cell.

In an embodiment, a spacing distance between the bare battery cell and the heat-softening region along the first direction is between 0.3 mm and 7 mm.

In the aforementioned technical solution, by setting an appropriate spacing distance, the toughness of the case can be improved while reducing damage to the bare battery cell, thereby improving the service life of the bare battery cell.

In an embodiment, a spacing distance between the bare battery cell and the heat-softening region along the first direction is between 1 mm and 3 mm.

In the aforementioned technical solution, by setting an appropriate spacing distance, damage to the bare battery cell can be reduced.

In an embodiment, the battery includes a lower plastic member, the lower plastic member being disposed on a side surface of the top cover that faces the bare battery cell, and a spacing distance between the lower plastic member and the heat-softening region along an inner-outer direction being greater than 1 mm, where the inner-outer direction is perpendicular to the first direction.

In the aforementioned technical solution, by disposing the lower plastic member on the side surface of the top cover that faces the bare battery cell, it can serve to insulate and separate the top cover from the bare battery cell, preventing direct contact between the top cover and the bare battery cell, thereby avoiding the risk of short circuit and battery damage. By setting an appropriate spacing distance, damage to the lower plastic member caused by the temperature of the heat-softening region can be reduced, thereby improving the service life of the lower plastic member and achieving good operational stability.

In an embodiment, the spacing distance between the lower plastic member and the heat-softening region along the inner-outer direction is between 1.2 mm and 5 mm.

In the aforementioned technical solution, by setting an appropriate spacing distance, damage to the lower plastic member can be reduced.

In an embodiment, a ratio of the hardness of the heat-softening region to the hardness of the body region is between 0.3 and 0.8.

In an embodiment, a ratio of the hardness of the heat-softening region to the hardness of the body region is between 0.5 and 0.8.

In the aforementioned technical solution, by setting an appropriate hardness ratio, on one hand, sufficient structural strength can be provided for the case to protect the bare battery cell and improve the service life of the bare battery cell; on the other hand, after expansion of the bare battery cell, the heat-softening region with lower hardness can reduce the force exerted by the bare battery cell on the case, thereby lowering the risk of cracking of the case and achieving high safety.

In an embodiment, the heat-softening region is at least formed in a target case wall of the case, the target case wall being a case wall of the case that has a largest area, and the target case wall being arranged adjacent to the installation opening.

In the aforementioned technical solution, after expansion of the bare battery cell, the target case wall is the largest object subjected to force from the expanded bare battery cell. Therefore, the hardness of the heat-softening region is set to be lower than that of the body region, which allows the heat-softening region with lower hardness to absorb and disperse the force exerted by the bare battery cell on the target case wall after the expansion of the bare battery cell, thereby reducing the risk of cracking of the case, subsequently reducing the probability of electrolyte leakage inside the case, and achieving high safety.

In an embodiment, the top cover and the case are connected by welding, where a hardness of a weld pool region formed during welding of the case is not less than the hardness of the heat-softening region, and a dimension of the heat-softening region along the first direction is not less than 0.2 mm.

In the aforementioned technical solution, by welding the top cover to the shell, and making the hardness of the weld pool region not less than that of the heat-softening region, the strength of connection between the top cover and the case can be improved. By providing a heat-softening region having an appropriate dimension, while ensuring that the case has sufficient structural strength, the case can also have strong toughness to absorb and disperse the force exerted by the expansion of the bare battery cell on the case, thereby reducing stress concentration at the installation opening, lowering the incidence of cracking at the installation opening, and improving the cyclic expansion life of the case during charging and discharging.

In an embodiment, the dimension of the heat-softening region along the first direction is not less than 1 mm.

In the aforementioned technical solution, by providing a heat-softening region having an appropriate dimension, reduction in the incidence of cracking at the installation opening is facilitated.

In an embodiment, the weld pool region is located on a side of the heat-softening region that faces the corresponding installation opening along the corresponding first direction.

In the aforementioned technical solution, the weld pool region is disposed between the installation opening and the heat-softening region along the first direction, which facilitates stable welding between the top cover and the case and provides high connection strength. Meanwhile, positioning the heat-softening region close to the weld pool region can reduce stress concentration in the weld pool region, thereby reducing the occurrence of cracking in the weld pool region.

In another aspect, the embodiments of the present disclosure disclose an electrical apparatus, including the battery according to any one of the aforementioned embodiments, the battery being configured to provide electrical energy. Due to the improved safety of the battery, the safety of the corresponding electrical apparatus is also improved.

### BRIEF DESCRIPTION OF THE DRAWINGS

FIG. 1 is a schematic structural diagram of a battery according to an embodiment of the present disclosure;
FIG. 2 is a cross-sectional schematic diagram of FIG. 1;
FIG. 3 is an enlarged schematic diagram of portion A in FIG. 2;
FIG. 4 is a metallograph of a body region;
FIG. 5 is a metallograph of a heat-softening region;
FIG. 6 is a Vickers hardness profile of a portion of a case; and
FIG. 7 is a Brinell hardness profile of a portion of a case.

Description of reference numerals
battery 100; bare battery cell 1; case 2; accommodating cavity 2a; installation opening 2b; heat-softening region 2c; body region 2d; weld pool region 2e; first case wall 21; second case wall 22; third case wall 23; top cover 3; pressure relief vent 3a; liquid injection port 3b; electrode terminal port 3c; lower plastic member 4.

### DETAILED DESCRIPTION

Embodiments of the technical solutions of the present disclosure will be described in detail below in conjunction with the drawings. The following embodiments are only used to illustrate the technical solutions of the present disclosure more clearly, and are therefore used only as examples, and should not be used to limit the protection scope of the present disclosure.

Unless otherwise defined, all technical and scientific terms used herein have the same meanings as commonly understood by those skilled in the art belonging to the technical field of the present disclosure. The terms used herein are intended only for the purpose of describing specific embodiments and are not intended to limit the present disclosure. The terms "including" and "having" and any variations thereof in the specification of the present disclosure and in the description of drawings above are intended to cover non-exclusive inclusion.

In the description of the embodiments of the present disclosure, the technical terms "first", "second", "third", and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, unless otherwise clearly specified and defined, technical terms "mounting", "connection", and the like should be broadly understood. For example, the connection may be fixed connection, detachable connection or integrated connection, may be mechanical connection or electrical connection, or may be direct connection, indirect connection through an intermediate medium, internal communication between two elements, or interaction relationship between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects with little or no interaction force, or contact between two objects with an interaction force.

At present, new energy batteries are increasingly applied in daily life and industry. New energy batteries are not only applied in energy storage power supply systems such as water power, fire power, wind power, and solar power stations, but also widely applied in electric transportation tools, such as electric bicycles, electric motorcycles and electric vehicles. With the continuous expansion of the application field of power batteries, their market demand is also constantly increasing.

As part of the inventive concept of the present disclosure, before describing the embodiments of the present disclosure, it is necessary to analyze the reasons why the case of a battery is prone to cracking in related technologies. Through reasonable analysis, the technical solutions of the embodiments of the present disclosure are derived.

In the related art, the bare battery cell is located in the accommodating cavity of the case. During the charging and discharging process of the battery, taking charging of a lithium-ion battery as an example, during the charging process of the lithium-ion battery, lithium ions deintercalate from the positive electrode and intercalate into the negative electrode. This causes an increase in the interlayer spacing of the negative electrode, thereby leading to expansion of the bare battery cell. The expanded bare battery cell will squeeze the case, causing it to deform and crack.

If a heat-softening region is provided on the case wall of the case, and the hardness of the heat-softening region is less than the hardness of the body region, after expansion of the bare battery cell, the heat-softening region with lower hardness can absorb and disperse the force exerted by the bare battery cell on a preset case wall, thereby reducing the risk of cracking of the case, subsequently reducing the probability of electrolyte leakage inside the case, and achieving high safety.

The solution of the embodiments of the present disclosure may be applied to, but is not limited to, a hard-case battery cell, a battery module containing a plurality of hard-case battery cells, or a battery pack containing hard-case battery cells or battery modules. It may also be applied to a soft-case battery cell, a battery module containing a plurality of soft-case battery cells, or a battery pack containing soft-case battery cells or battery modules.

The battery cell is a unit that can realize mutual transformation between chemical energy and electric energy.

In the embodiments of the present disclosure, the battery cell may be a secondary battery. The secondary battery refers to a battery cell that can be charged to activate the active material and continue to be used after the battery cell is discharged.

In the embodiments of the present disclosure, the battery cell may be a lithium ion battery, a sodium ion battery, a sodium/lithium ion battery, a lithium metal battery, a sodium metal battery, a lithium sulfur battery, a magnesium ion battery, a nickel hydrogen battery, a nickel cadmium battery, a lead storage battery, etc., which is not limited in the embodiments of the present disclosure.

The bare battery cell 1 refers to an electrochemical core in the battery, i.e., a battery cell. The bare battery cell 1 contains a positive electrode and a negative electrode and is capable of storing and releasing electrical energy.

The bare battery cell 1 may be formed by winding or stacking electrode plates.

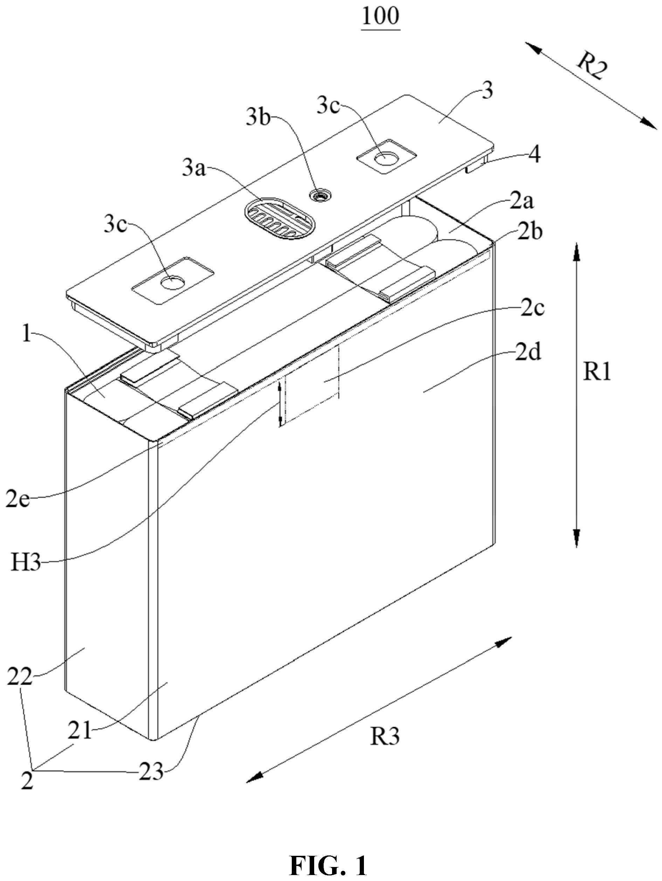

In an aspect, the embodiments of the present disclosure provide a battery. Referring to FIGS. 1 to 3, the battery 100 includes a bare battery cell 1, a case 2, and a top cover 3. The case 2 has an accommodating cavity 2a formed therein, where the accommodating cavity 2a penetrates through one side surface of the case 2 along a first direction to form an installation opening 2b, the bare battery cell 1 is disposed in the accommodating cavity 2a, and a heat-softening region 2c and a body region 2d are formed in a case wall of the case 2, where a hardness of the heat-softening region 2c is lower than a hardness of the body region 2d, and the bare battery cell 1 and the heat-softening region 2c are spaced apart along the first direction. The top cover 3 covers the installation opening 2b.

The case 2 refers to a structure having a certain wall thickness. The case 2 is mainly used for accommodating the bare battery cell 1, providing a certain degree of protection to the bare battery cell 1, thereby reducing the risk of damage due to the bare battery cell 1 being exposed to the outside.

As an example, the shape of the case 2 may be a rectangular prism or a cylinder. When the shape of the case 2 is a rectangular prism, the corresponding battery 100 is a prismatic battery, and when the shape of the case 2 is a cylinder, the corresponding battery 100 is a cylindrical battery.

The accommodating cavity 2a refers to an accommodating space inside the case 2, which is configured to accommodate the bare battery cell 1.

The installation opening 2b is in communication with the accommodating cavity 2a. The bare battery cell 1 may be placed into the accommodating cavity 2a of the case 2 through the installation opening 2b.

Both the heat-softening region 2c and the body region 2d refer to the case wall of the case 2, which may be an inner wall of the case 2, or an outer wall of the case 2. The difference lies in that the hardness of the heat-softening region 2c is less than the hardness of the body region 2d. For example, the body region 2d may specifically be a region of the case wall of the case 2 that has not undergone heating and softening, and the heat-softening region 2c may specifically be formed by heating and softening the body region 2d.

In the battery 100 according to the embodiments of the present disclosure, by providing the accommodating cavity 2a inside the case 2 and the installation opening 2b in communication with the accommodating cavity 2a, the bare battery cell 1 can be placed into the accommodating cavity 2a through the installation opening 2b, thereby protecting the bare battery cell 1 to some extent and improving the service life of the bare battery cell 1. Here, during the charging and discharging process of the battery 100, the bare battery cell 1 undergoes cyclic expansion, causing stress concentration at the installation opening 2b where the top cover 3 is connected to the case 2, which easily leads to cracking. Therefore, in the present disclosure, by forming the heat-softening region 2c and the body region 2d on the case wall of the case 2, and making the hardness of the heat-softening region 2c lower than that of the body region 2d, after expansion of the bare battery cell 1, the heat-softening region 2c with lower hardness can absorb and disperse the force exerted by the bare battery cell 1 on the case wall of the case 2, thereby reducing the risk of cracking of the case 2, subsequently reducing the probability of electrolyte leakage inside the case 2, and achieving high safety. By spacing the bare battery cell 1 and the heat-softening region 2c apart along the first direction, damage to the bare battery cell 1 caused by the temperature of the heat-softening region 2c can be reduced, thereby improving the service life of the bare battery cell 1.

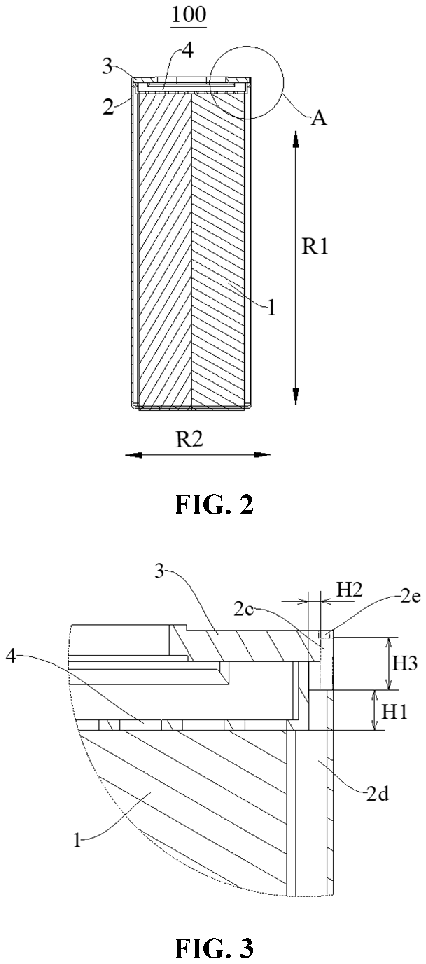

In an embodiment, referring to FIG. 3, a spacing distance between the bare battery cell 1 and the heat-softening region 2c along the first direction is between 0.3 mm and 7 mm.

As an example, the spacing distance between the heat-softening region 2c and the bare battery cell 1 along the first direction may be represented by H1. H1 may be 0.3 mm, 1 mm, 2 mm, 3 mm, 4 mm, 5 mm, 6 mm, 7 mm, and so on.

In this way, by setting an appropriate spacing distance, the toughness of the case 2 can be improved while reducing damage to the bare battery cell 1, thereby improving the service life of the bare battery cell 1.

In an embodiment, a spacing distance between the bare battery cell 1 and the heat-softening region 2c along the first direction is between 1 mm and 3 mm.

As an example, the spacing distance H1 between the bare battery cell 1 and the heat-softening region 2c along the first direction may be 1 mm, 1.2 mm, 1.5 mm, 1.8 mm, 2 mm, 2.2 mm, 2.5 mm, 2.8 mm, 3 mm, and so on.

In this way, by setting an appropriate spacing distance, damage to the bare battery cell 1 can be reduced.

In an embodiment, referring to FIG. 1 and FIG. 3, the battery 100 includes a lower plastic member 4, the lower plastic member 4 being disposed on a side surface of the top cover 3 that faces the bare battery cell 1, and a spacing distance between the lower plastic member 4 and the heat-softening region 2c along an inner-outer direction being greater than 1 mm, where the inner-outer direction is perpendicular to the first direction.

As an example, the spacing distance between the lower plastic member 4 and the heat-softening region 2c along the inner-outer direction may be represented by H2. H2 may be 1 mm, 2 mm, 3 mm, 4 mm, 5 mm, 6 mm, 7 mm, 8 mm, 9 mm, 10 mm, and so on.

In this way, by disposing the lower plastic member 4 on the side surface of the top cover 3 that faces the bare battery cell 1, it can serve to insulate and separate the top cover 3 from the bare battery cell 1, preventing direct contact between the top cover 3 and the bare battery cell 1, thereby avoiding the risk of short circuit and damage to the battery 100. By setting an appropriate spacing distance, damage to the lower plastic member 4 caused by the temperature of the heat-softening region 2c can be reduced, thereby improving the service life of the lower plastic member 4 and achieving good operational stability.

As an example, the inner-outer direction may be a second direction, where the second direction is perpendicular to the first direction. For example, in FIG. 1, R1 may be the first direction, R2 may be the second direction, and R3 may be a third direction.

In an embodiment, the spacing distance between the lower plastic member 4 and the heat-softening region 2c along the inner-outer direction is between 1.2 mm and 5 mm.

As an example, the spacing distance H2 between the lower plastic member 4 and the heat-softening region 2c along the inner-outer direction may be 1.2 mm, 1.5 mm, 2 mm, 2.5 mm, 3 mm, 3.5 mm, 4 mm, 4.5 mm, 5 mm, and so on.

In this way, by setting an appropriate spacing distance, damage to the lower plastic member 4 can be reduced.

In an embodiment, a ratio of the hardness of the heat-softening region 2c to the hardness of the body region 2d is between 0.3 and 0.8.

As an example, the ratio of the hardness of the heat-softening region 2c to the hardness of the body region 2d may be 0.3, 0.35, 0.4, 0.45, 0.5, 0.55, 0.6, 0.65, 0.7, 0.75, 0.8, and so on.

In this way, by setting an appropriate hardness ratio, on one hand, sufficient structural strength can be provided for the case 2 to protect the bare battery cell 1 and improve the service life of the bare battery cell 1; on the other hand, after expansion of the bare battery cell 1, the heat-softening region 2c with lower hardness can reduce the force exerted by the bare battery cell 1 on the case 2, thereby lowering the risk of cracking of the case 2 and achieving high safety.

In an embodiment, a ratio of the hardness of the heat-softening region 2c to the hardness of the body region 2d is between 0.5 and 0.8.

As an example, the ratio of the hardness of the heat-softening region 2c to the hardness of the body region 2d may be 0.5, 0.55, 0.6, 0.65, 0.7, 0.75, 0.8, and so on.

It should be noted that the hardness of the heat-softening region 2c and the hardness of the body region 2d are both Brinell hardness. That is to say, the aforementioned hardness ratio is a Brinell hardness ratio.

It should be noted that HB is the unit of Brinell hardness.

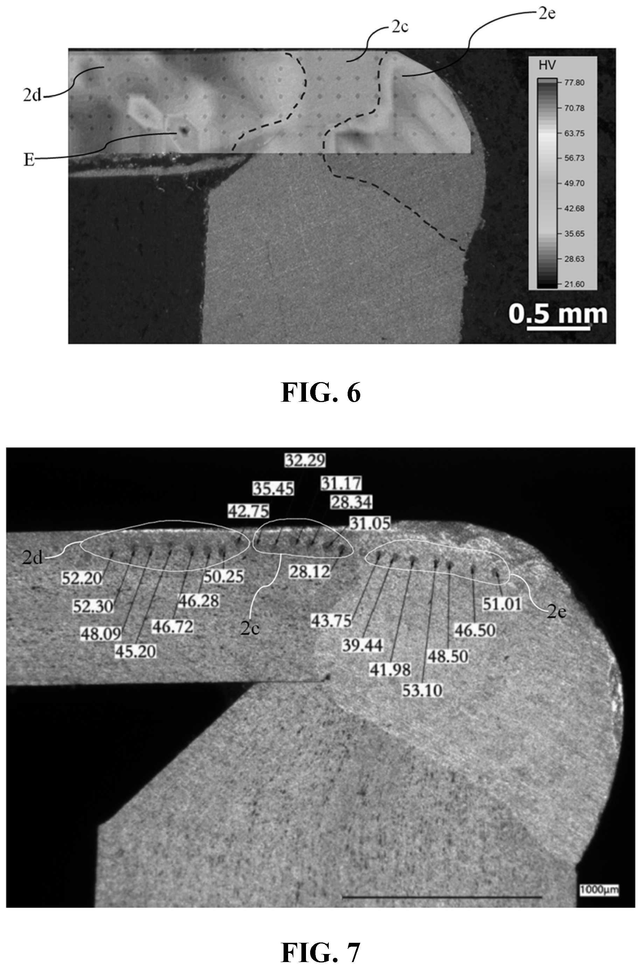

In an embodiment, referring to FIGS. 6 and 7, FIG. 6 is a Vickers hardness profile of a portion of a case, and FIG. 7 is a Brinell hardness profile of a portion of a case. The material of the case 2 is aluminum. The hardness of the body region 2d is between 35 HB and 65 HB, and the hardness of the heat-softening region 2c is between 25 HB and 40 HB.

As an example, the hardness of the body region 2d may be 35 HB, 40 HB, 45 HB, 50 HB, 55 HB, 60 HB, or 65 HB, and so on; and the hardness of the heat-softening region 2c may be 25 HB, 30 HB, 35 HB, or 40 HB, and so on.

Here, by providing a heat-softening region 2c having an appropriate hardness and providing a body region 2d having an appropriate hardness, not only can sufficient structural strength be provided for the case 2, but also the risk of cracking of the case 2 can be reduced.

It should be noted that HV is the unit of Vickers hardness.

As an example, in an embodiment, the reason why point E in FIG. 6 has a lower hardness is due to the presence of a hole.

As an example, in an embodiment, the hardness of the heat-softening region 2c may be 30 HB, and the hardness of the body region 2d may be 60 HB.

As an example, in an embodiment, referring to Table 1, which is a Mechanical Properties Table for 3003 Alloy, where O, H12, H14, H16, or H18 is a material temper designation. The hardness column in the table shows the hardness before processing. Taking H14 as an example, before being processed into the case 2, its hardness is 40 HB, and after being processed into the case 2, its hardness will be greater than 40 HB; and after being softened into the heat-softening region 2c, its hardness will be less than 40 HB. Taking H18 as another example, before being processed into the case 2, its hardness is 55 HB, and after being processed into the case 2, its hardness will be greater than 55 HB; and after being softened into the heat-softening region 2c, its hardness will be less than 55 HB.

**Table 1 Mechanical Properties of 3003 Alloy**

| Material Temper Designation | Tensile Strength / MPa | Yield Strength / MPa | Elongation / % | Hardness / HB | Shear Strength / MPa | Fatigue Strength / MPa |
|---|---|---|---|---|---|---|
| O | 110 | 42 | 30-40 | 28 | 76 | 48 |
| H12 | 130 | 125 | 10-20 | 35 | 83 | 55 |
| H14 | 150 | 145 | 8-15 | 40 | 97 | 62 |
| H16 | 175 | 175 | 5-14 | 47 | 105 | 69 |
| H18 | 200 | 185 | 4-10 | 55 | 110 | 69 |

It should be noted that 3003 is an aluminum-manganese series alloy.

It should be noted that the "O" temper in the above table refers to data for the corresponding aluminum alloy in the annealed temper.

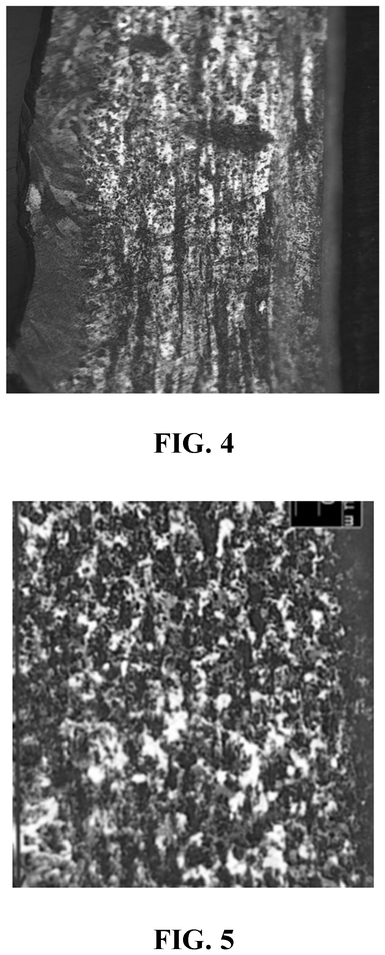

In an embodiment, referring to FIGS. 4 and 5, FIG. 4 is a metallograph of a body region 2d, and FIG. 5 is a metallograph of a heat-softening region 2c. A grain type of the body region 2d is elongated grains and/or banded grains, and a grain type of the heat-softening region 2c is columnar grains and/or equiaxed grains.

As an example, the grain type of the body region 2d may be elongated grains, or the grain type of the body region 2d may be banded grains, or alternatively, the grain type of the body region 2d may be both elongated grains and banded grains. The grain type of the heat-softening region 2c may be columnar grains, or the grain type of the heat-softening region 2c may be equiaxed grains, or alternatively, the grain type of the heat-softening region 2c may be both columnar grains and equiaxed grains.

Banded grains refer to a grain type where grains are arranged in a band-shape along a certain direction.

Elongated grains refer to a grain type where grains grow along a specific direction, forming elongated or fibrous shapes.

Columnar grains are a type of crystal morphology characterized by a longitudinally extending columnar shape.

Equiaxed grains refer to grains which have relatively similar dimensions in all directions, and thus possess high symmetry. In the equiaxed crystal system, the three crystallographic axes are equal in length and mutually perpendicular at 90°.

In this way, the grain type of the body region 2d is configured as elongated grains and/or banded grains, and the grain type of the heat-softening region 2c is configured as columnar grains and/or equiaxed grains, which indicates that the hardness of the heat-softening region 2c is lower than that of the body region 2d. This is because during solidification of metal, the formation of columnar and equiaxed grains can be hindered, leading to blurred boundaries between grains and a relatively disordered lattice structure, whereas banded and elongated grains are relatively easier to form, and their lattice structure is relatively ordered. The crystal structure affects the mechanical properties of the metal. For example, a disordered crystal structure leads to reduced hardness and strength but increased toughness, while an ordered lattice structure results in higher hardness and strength but reduced toughness. That is to say, when the case 2 is subjected to the force exerted by the expansion of the bare battery cell 1, the disordered crystal structure, due to its higher toughness, can better absorb and disperse the force, thereby reducing crack propagation and the occurrence of fracture.

As an example, in an embodiment, the reason why point E in FIG. 6 has a lower hardness is due to pores in the case wall of the case 21, but the grain type at that point is still elongated grains and/or banded grains.

As an example, in an embodiment, the heat-softening region 2c may be formed by heating and annealing the body region 2d.

As an example, in an embodiment, the body region 2d does not need to fully reach the annealed temper, as long as its hardness meets the hardness requirements of the heat-softening region 2c.

As an example, in an embodiment, the heat-softening region 2c may be formed by laser softening the body region 2d. On one hand, laser softening offers high precision and controllability, allowing for precise heating of specific regions without affecting surrounding regions. On the other hand, laser softening is characterized by being non-contact, making the processing safer. Furthermore, laser heating is fast, enabling the softening process to be completed in a short time, resulting in high efficiency.

In an embodiment, the heat-softening region 2c is at least formed in a target case wall of the case 2, the target case wall being a case wall of the case 2 that has a largest area, and the target case wall being arranged adjacent to the installation opening 2b.

The target case wall refers to the case wall of the case 2 that has the largest area and is arranged adjacent to the installation opening 2b.

As an example, the case 2 has five case walls. Two of the five case walls are first case walls 21, and the two first case walls 21 have equal areas. Two of the five case walls are second case walls 22, and the two second case walls 22 have equal areas. The last of the five case walls is a third case wall 23. The areas of the second case walls 22 and the third case wall 23 are both smaller than the area of a first case wall 21. The two first case walls 21 are spaced apart along a second direction, the two second case walls 22 are spaced apart along a third direction, and the third case wall 23 is connected along the first direction to the two first case walls 21 and the two second case walls 22 to collectively define the accommodating cavity 2a and the installation opening 2b. A first case wall 21 may be the target case wall.

Here, after expansion of the bare battery cell 1, the target case wall is the largest object subjected to force from the expanded bare battery cell 1. Therefore, the hardness of the heat-softening region 2c is set to be lower than that of the body region 2d, which allows the heat-softening region 2c with lower hardness to absorb and disperse the force exerted by the bare battery cell 1 on the target case wall after the expansion of the bare battery cell 1, thereby reducing the risk of cracking of the case 2, subsequently reducing the probability of electrolyte leakage inside the case 2, and achieving high safety.

As an example, in an embodiment, referring to FIG. 1, a pressure relief vent 3a, a liquid injection port 3b, and an electrode terminal port 3c are formed on the top cover 3. The pressure relief vent 3a, the liquid injection port 3b, and the electrode terminal port 3c all penetrate through the top cover 3 along the first direction. When the top cover 3 covers the installation opening 2b, the pressure relief vent 3a, the liquid injection port 3b, and the electrode terminal port 3c are all in communication with the accommodating cavity 2a. The pressure relief vent 3a is configured to relieve pressure from the accommodating cavity 2a after thermal runaway of the bare battery cell 1, thereby preventing explosion. The liquid injection port 3b is configured to allow electrolyte injection into the accommodating cavity 2a. The electrode terminal port 3c facilitates electrical connection to the tab of the bare battery cell 1.

In an embodiment, referring to FIG. 1 and FIG. 3, the top cover 3 and the case 2 are connected by welding, where a hardness of a weld pool region 2e formed during welding of the case 2 is not less than the hardness of the heat-softening region 2c, and a dimension of the heat-softening region 2c along the first direction is not less than 0.2 mm.

The weld pool region 2e refers to the portion of the base metal melted into a pool shape by the welding arc heat, which is the liquid metal portion with a certain geometric shape that is formed on the workpiece during fusion welding.

As an example, the top cover 3 and the case 2 are welded at the installation opening 2b, where the hardness of the weld pool region 2e21e formed by welding the case 2 is not less than the hardness of the heat-softening region 2c. The dimension of the heat-softening region 2c along the first direction may be represented by H3. H3 may be 0.2 mm, 0.3 mm, 0.4 mm, 0.5 mm, 0.6 mm, 0.7 mm, 0.8 mm, 0.9 mm, 1 mm, 3 mm, 5 mm, 8 mm, 10 mm, 12 mm, and so on.

In this way, by welding the top cover 3 to the case 2, and making the hardness of the weld pool region 2e not less than that of the heat-softening region 2c, the strength of connection between the top cover 3 and the case 2 can be improved. By providing a heat-softening region 2c having an appropriate dimension, while ensuring that the case 2 has sufficient structural strength, the case 2 can also have strong toughness to absorb and disperse the force exerted by the expansion of the bare battery cell 1 on the case 2, thereby reducing stress concentration at the installation opening 2b, lowering the incidence of cracking at the installation opening 2b, and improving the cyclic expansion life of the case 2 during charging and discharging.

In an embodiment, the dimension of the heat-softening region 2c along the first direction is not less than 1 mm.

As an example, the dimension H3 of the heat-softening region 2c along the first direction may be 1 mm, 2 mm, 3 mm, 3 mm, 4 mm, 5 mm, 6 mm, 7 mm, 8 mm, 9 mm, 10 mm, 11 mm, 12 mm, and so on.

In this way, by providing a heat-softening region 2c having an appropriate dimension, reduction in the incidence of cracking at the installation opening 2b is facilitated.

In an embodiment, the weld pool region 2e is located on a side of the heat-softening region 2c that faces the corresponding installation opening 2b along the corresponding first direction.

That is to say, the weld pool region 2e is disposed between the installation opening 2b and the heat-softening region 2c along the first direction, which facilitates stable welding between the top cover 3 and the case 2 and provides high connection strength. Meanwhile, positioning the heat-softening region 2c close to the weld pool region 2e can reduce stress concentration in the weld pool region 2e, thereby reducing the occurrence of cracking in the weld pool region 2e.

In another aspect, the embodiments of the present disclosure disclose an electrical apparatus, the electrical apparatus including the battery 100 according to any one of the aforementioned embodiments, the battery 100 being configured to provide electrical energy. Due to the improved safety of the battery 100, the safety of the corresponding electrical apparatus is also improved.

The electrical apparatus is an apparatus that uses electric energy as the energy source to realize corresponding functions by consuming the electric energy. By way of example, the electrical apparatus may be, but is not limited to, a mobile phone, a tablet, a laptop, an electric toy, an electric tool, a battery vehicle, an electric vehicle, a ship, a spacecraft, and the like. Among them, the electric toy may include a stationary or mobile electric toy, such as a game machine, an electric car toy, an electric ship toy, or an electric airplane toy, and the spacecraft may include an airplane, a rocket, an aerospace plane, a spaceship, and the like.

The electrical apparatus of the embodiments of the present disclosure may include an apparatus body and a power supply device, where the power supply device is used to supply power to the apparatus body, and the power supply device may include the battery 100.

The apparatus body refers to the body structure that consumes electric energy to achieve the corresponding function. For example, the electrical apparatus may be a mobile phone, the apparatus body is a part capable of realizing functions such as communication, and power is supplied to the part capable of realizing functions such as communication through the battery 100. For example, the electrical apparatus may be a car, in which the apparatus body is a part for a passenger to sit in and that can travel on the road, and power is supplied to the part for a passenger to sit in and that can travel on the road through the battery 100.

A power supply device refers to a device capable of outputting electric energy. By way of example, electric energy can be output through the battery 100.

Taking the electrical apparatus being a vehicle in an embodiment of the present disclosure as an example for illustration.

The vehicle according to an embodiment of the present application may be a fuel vehicle, a gas vehicle, or a new-energy vehicle, and the new-energy vehicle may be an all-electric vehicle, a hybrid electric vehicle, an extended range electric vehicle, or the like. A battery 100 is provided inside the vehicle. The battery 100 may be provided at the bottom, or head, or tail of the vehicle. The battery 100 may be configured to supply power to the vehicle. For example, the battery 100 may be used as an operating power source of the vehicle. The vehicle may further include a controller and a motor. The controller may be used to control the battery to supply power to the motor. For example, the battery unit may serve to satisfy the operating power demand when the vehicle is starting, navigating, and traveling.

For the battery 100 according to the embodiments of the present disclosure, referring to FIGS. 1 to 7, the battery 100 includes a bare battery cell 1, a case 2, and a top cover 3. The case 2 has an accommodating cavity 2a formed therein, where the accommodating cavity 2a penetrates through one side surface of the case 2 along a first direction to form an installation opening 2b, the bare battery cell 1 is disposed in the accommodating cavity 2a, the top cover 3 covers the installation opening 2b, and a heat-softening region 2c and a body region 2d are formed in a case wall of the case 2. The heat-softening region 2c is at least formed in a target case wall of the case 2, the target case wall being a case wall of the case 2 that has a largest area, and the target case wall being arranged adjacent to the installation opening 2b. A hardness of the heat-softening region 2c is lower than a hardness of the body region 2d. Specifically, a ratio of the hardness of the heat-softening region 2c to the hardness of the body region 2d is between 0.5 and 0.8. A grain type of the heat-softening region 2c is columnar grains and/or equiaxed grains, and a grain type of the body region 2d is elongated grains and/or banded grains. A spacing distance between the bare battery cell 1 and the heat-softening region 2c along the first direction is between 1 mm and 3 mm. The battery 100 includes a lower plastic member 4, the lower plastic member 4 being disposed on a side surface of the top cover 3 that faces the bare battery cell 1, and a spacing distance between the lower plastic member 4 and the heat-softening region 2c along an inner-outer direction being between 1.2mm and 5 mm, where the inner-outer direction is perpendicular to the first direction. The top cover 3 and the case 2 are connected by welding, where a hardness of a weld pool region 2e formed during welding of the case 2 is not less than the hardness of the heat-softening region 2c, the weld pool region 2e is located on a side of the heat-softening region 2c that faces the corresponding installation opening 2b along the corresponding first direction, and the dimension of the heat-softening region 2c along the first direction is not less than 1 mm.

The above description is merely preferred embodiments of the present disclosure, but is not intended to limit the present disclosure. Those skilled in the art may make various modifications and changes to the present disclosure. All modifications, equivalent replacements and improvements made within the spirit and principle of the present disclosure shall be included within the scope of protection of the present disclosure.

## Claims

1. A battery, comprising:
a bare battery cell;
a case having an accommodating cavity formed therein, wherein the accommodating cavity penetrates through one side surface of the case along a first direction to form an installation opening, the bare battery cell is disposed in the accommodating cavity, and a heat-softening region and a body region are formed in a case wall of the case, wherein a hardness of the heat-softening region is lower than a hardness of the body region, and the bare battery cell and the heat-softening region are spaced apart along the first direction; and
a top cover, the top cover covering the installation opening.

2. The battery according to claim 1, wherein a spacing distance between the bare battery cell and the heat-softening region along the first direction is between 0.3 mm and 7 mm.

3. The battery according to claim 2, wherein a spacing distance between the bare battery cell and the heat-softening region along the first direction is between 1 mm and 3 mm.

4. The battery according to any one of claims 1 to 3, wherein the battery comprises a lower plastic member, the lower plastic member being disposed on a side surface of the top cover that faces the bare battery cell, and a spacing distance between the lower plastic member and the heat-softening region along an inner-outer direction being greater than 1 mm, wherein the inner-outer direction is perpendicular to the first direction.

5. The battery according to claim 4, wherein the spacing distance between the lower plastic member and the heat-softening region along the inner-outer direction is between 1.2 mm and 5 mm.

6. The battery according to any one of claims 1 to 5, wherein a ratio of the hardness of the heat-softening region to the hardness of the body region is between 0.3 and 0.8.

7. The battery according to claim 6, wherein the ratio of the hardness of the heat-softening region to the hardness of the body region is between 0.5 and 0.8.

8. The battery according to any one of claims 1 to 7, wherein the heat-softening region is at least formed in a target case wall of the case, the target case wall being a case wall of the case that has a largest area, and the target case wall being arranged adjacent to the installation opening.

9. The battery according to any one of claims 1 to 8, wherein the top cover and the case are connected by welding, wherein a hardness of a weld pool region formed during welding of the case is not less than the hardness of the heat-softening region, and a dimension of the heat-softening region along the first direction is not less than 0.2 mm.

10. The battery according to claim 9, wherein the dimension of the heat-softening region along the first direction is not less than 1 mm.

11. The battery according to claim 9 or 10, wherein the weld pool region is located on a side of the heat-softening region that faces the corresponding installation opening along the corresponding first direction.

12. An electrical apparatus, comprising the battery according to any one of claims 1 to 11, the battery being configured to provide electrical energy.
